# EUROPÄISCHE PATENTANMELDUNG

(11) **EP 4 682 481 A1**
(43) Veröffentlichungstag der Anmeldung: **21.01.2026**
(21) Anmeldenummer: 25189247.7
(22) Anmeldetag: 14.07.2025
(51) Int. Cl.: G01F 13/00, B01J 8/00

(54) **DOSIEREINHEIT MIT VARIABLER ÖFFNUNGSWEITE**

(30) Priorität: 15.07.2024 DE 102024120171
(71) Anmelder: Teubert Maschinenbau GmbH, 78176 Blumberg (DE)
(72) Erfinder: Teubert, Yannick, 78176 Blumberg (DE)
(74) Vertreter: Dr. Völger, Wolfgang

(57) **Zusammenfassung**

Die vorliegende Erfindung betrifft einen Behälter zur Bevorratung und Ausgabe von fließ- und/oder rieselfähigem Material mit einem mindestens zwei Auslässe aufweisenden Behälterboden, wobei das fließ- und/oder rieselfähige Material durch diese mindestens zwei Auslässe aus dem Behälter entnehmbar ist,
dadurch gekennzeichnet, dass jeder Auslass im Behälterboden separat und unabhängig über eine Dosiereinheit ansteuerbar ist.

Die vorliegende Erfindung betrifft bezieht sich ferner auf eine Dosiereinheit mit variabler Öffnungsweite zur Dosierung von fließ- und/oder rieselfähigem Material, umfassend
- eine Öffnung (16) für das fließ- und/oder rieselfähige Material, wobei die Öffnung (16) zum Anschluss an einen Auslass eines Behälters ausgelegt ist,
- eine Verschlussblende (6) zum Öffnen und Schließen der Öffnung (16) für das fließ- und/oder rieselfähige Material,
- einen elektrischen Antriebs- und Stellmotor (1) für die Verschlussblende (6),
wobei der geometrische Mittelpunkt der Verschlussblende (6) auf der Achse der Öffnung (16) für das fließ- und/oder rieselfähige Material liegt.

## Beschreibung

Die Erfindung betrifft einen Behälter zur Bevorratung und Ausgabe von fließ- und/oder rieselfähigem Material mit einem mindestens zwei Auslässe aufweisenden Behälterboden, wobei das fließ- und/oder rieselfähige Material durch diese mindestens zwei Auslässe aus dem Behälter entnehmbar ist und jeder Auslass im Behälterboden separat und unabhängig über eine Dosiereinheit ansteuerbar ist. Die Erfindung bezieht sich ebenfalls auf die Dosiereinheit als solche.

Dosiereinheiten sind seit geraumer Zeit aus dem Stand der Technik bekannt. Es ist Aufgabe von Dosiereinheiten, eine Öffnung am unteren Ende eines Behälters mit rieselfähigem Material zu öffnen oder zu verschließen. In der Regel lässt sich der Öffnungsquerschnitt mit Hilfe einer Blende einstellen, um verschiedenen Gütern gerecht zu werden. Dabei ist zu beachten, dass der Mittelpunkt einer Blendenöffnung nicht zwangsweise mit dem Mittelpunkt eines Auslasses eines Behälters auf einer Achse liegt.

So beschreibt beispielsweise DE 93 09 294 U1 eine Dosier- und Fülleinrichtung für fließfähige Nahrung, wobei ein Ventil entweder manuell oder durch einen Elektromagneten betätigt werden kann. Das Ventil verfügt außerdem über einen Dämpfungsmechanismus beim Schließvorgang und wird mit einer Feder in der geöffneten Stellung gehalten. Aus den Abbildungen und der Beschreibung sind zwei Mechanismen erkennbar: ein Schiebeventil und ein Ventil, welches durch eine Kippbewegung die Öffnung freigibt. Das Problem des ungenauen Portionierens von bestimmten Mengen von Schüttgut wird durch die in DE 93 09 686 U1 offenbarte Lösung behoben. Die spezifizierte Menge wird in einer Lade abgemessen. Beim offenbarten Ventil liegt der Mittelpunkt der Blende nur dann auf dem Mittelpunkt der Behälteröffnung, wenn das Ventil vollständig geöffnet ist. Der Mittelpunkt des Materialstroms liegt auf dem Mittelpunkt der Ventilöffnung.

Aus dem Bereich der Photographie sind außerdem schon sehr lange Sektionalverschlüsse bekannt, die die Belichtung des Films ermöglicht haben. Stellvertretend soll hier auf DD 050 204 A1 und DD 763 678 B3 verwiesen werden.

Die obig beschriebenen Systeme beziehen sich auf die Möglichkeit, den Materialstrom, insbesondere bestehend aus einem rieselfähigen Material, aus einer einzelnen Düse zu regulieren.

Für die Füllung komplexer Formen mit fließ- und/oder rieselfähigem Material, d.h. Schüttgut oder Rieselgut, ist unter Anlagenbetreibern auch bekannt, die Öffnung im Boden eines Behälters mit einem einfachen Dosierer zu versehen. Dieser Dosierer umfasst dabei eine Platte im Boden des Behälters, welche mit einem Lochmuster versehen ist, wobei das Lochmuster derart angeordnet ist, dass eine möglichst gleichmäßige Füllung der Form erreicht wird. Diese Platte und eine ebenfalls mit einem Lochmuster versehene Gegenplatte werden gegeneinander verdreht, um den Materialfluss durch das Lochmuster zu ermöglichen und die Menge des Materials entsprechend zu regulieren. Die sogenannte Dosierscheibe, zumeist aus Messing gefertigt, wird dafür durch einen zentralen Motor in rotatorische Schwingungen versetzt um damit einen Auslassstrom aus dem Behälter in eine Form zu erreichen. Am eigentlichen Behälterboden befinden sich Anschlussmöglichkeiten für Injektoren oder den weiteren Materialtransport. Unterschiedliche Durchlassmengen können über unterschiedliche Lochmuster und die Lochzahl ein der Dosierscheibe eingestellt werden. Der Materialstrom wird pulsierend gefördert, indem der Motor ein und ausgeschaltet wird.

Die Ansteuerung einzelner Düsen, Auslässe oder Öffnungen im Lochmuster ist nach dem Stand der Technik für rieselfähiges Material nicht möglich und die Qualität der Füllung einer Form dadurch abhängig vom (technisch) möglichen Lochbild in der Dosierscheibe. Die Füllung komplexer Formen mit komplexen Geometrien erfordert viel Erfahrung bei der Fertigung eines entsprechenden Lochbildes, viel Zeit beim Füllvorgang und falls im Prozess erforderlich, einen gesteigerten Bedarf an Druckluft. Selbst kleine Änderungen in der Geometrie des zu fertigenden Produktes, welche zu einer Änderung der Form führt, führt demzufolge auch zwangsweise zu einem kompletten Austausch der Lochscheiben und damit auch zu einem Abfall der Wirtschaftlichkeit.

Es besteht daher Bedarf an einer Vorrichtung, mit der rieselfähiges Material aus einem Behälter mit mehreren Auslässen entnommen werden kann, wobei jeder dieser Auslässe einzeln und gezielt ansteuerbar ist.

Der Erfindung liegt deshalb die Aufgabe zugrunde, für einen Behälter mit mindestens zwei Auslässen eine neuartige Dosiereinheit mit präziser Steuerung dieser bereitzustellen, um den Füllungsgrad der Form sowie den Materialfluss zu optimieren und auch kurzfristig auf geänderte Anforderungen bei der Formfüllung reagieren zu können.

Diese Aufgabe wird zunächst durch eine Dosiereinheit mit variabler Öffnungsweite zur Dosierung von fließ- und/oder rieselfähigem Material gelöst, umfassend
- eine Öffnung (16) für das fließ- und/oder rieselfähige Material, wobei die Öffnung (16) zum Anschluss an einen Auslass eines Behälters, insbesondere des vorstehend beschriebenen erfindungsgemäßen Behälters, ausgelegt ist,
- eine Verschlussblende (6) zum Öffnen und Schließen der Öffnung (16) für das fließ- und/oder rieselfähige Material,
- einen elektrischen Antriebs- und Stellmotor (1) für die Verschlussblende (6), wobei der geometrische Mittelpunkt der Verschlussblende (6) auf der Achse der Öffnung (16) für das fließ- und/oder rieselfähige Material liegt.

Die vorgenannte Aufgabe wird bevorzugt gelöst durch voneinander unabhängig ansteuerbare Dosiereinheiten am Behälterboden, die jeweils über eine Verschlussblende (6) zum Öffnen und Schließen eines Auslasses am Behälter für fließ- und/oder rieselfähiges Material sowie einen elektrischen Antriebs- und Stellmotor (1) für jede Verschlussblende (6) verfügen.

Eine Verschlussblende (6) kann dabei derart gestaltet sein, dass der Mittelpunkt der Verschlussblende (6) mit dem Mittelpunkt der jeweiligen Öffnung im Behälterboden auf einer Achse liegt ("Fall 1"), oder so, dass diese Mittelpunkte nicht auf einer Achse liegen ("Fall 2").

In der beanspruchten Ausführungsform, Fall 1, ist ein Mechanismus mit zumindest zwei Elementen denkbar, die, miteinander gekoppelt, vom Rand der Verschlussblendenöffnung über einen Mechanismus nach innen bewegt werden, um die Verschlussblende (6) zu schließen. Durch die Kopplung der Elemente liegt der Blendenmittelpunkt immer auf dem Mittelpunkt der Behälteröffnung, sofern diese fluchtend miteinander montiert sind. Da zumindest zwei Elemente einer Verschlussblende (6) vor die Öffnung im Behälterboden bewegt werden, ist die auftreffende Flächenkraft durch das Gewicht des Schüttgutes pro Element geringer, als wenn es sich nur um ein Element handeln würde, und die Lager können entsprechend dimensioniert werden, um diese Kräfte aufzunehmen. Trotz der erforderlichen Mechanik für die Verschlussblende (6) kann diese Ausführungsart also wirtschaftlich sein.

Wird die Öffnung im Behälterboden hingegen mit einer tangential an der Öffnung im Behälterboden (oder über eine gesonderte Konstruktion mit diesem verbundenen) drehbar gelagerten n-eckigen Platte oder runden Scheibe als Verschlussblende (6) derart verschlossen, dass diese Elemente vor die Öffnung am Behälterboden gedreht werden, so liegen die Mittelpunkte der Verschlussblende (6) (und damit des dem Materialstrom zur Verfügung stehenden Querschnitts) und der Öffnung am Behälterboden nicht auf einer Achse ("Fall 2"). Gleiches gilt für eine Platte beliebiger Form, aber entsprechender Größe zum Verschluss der Behälteröffnung, welche von der Seite vor die Öffnung geschoben wird. Die Platte wird dabei zum Mittelpunkt der Blendenöffnung geschoben. Diese Lösung bedeutet auch, dass es bei mehreren Öffnungen im Behälterboden und damit mehreren Verschlussblenden (6) ein Platzproblem geben könnte, da bei geöffneter Verschlussblende (6) die Blendenelemente derart angeordnet sein müssen, dass keine Öffnung im Behälterboden blockiert wird.

In einer besonders bevorzugten Ausführungsform, bei welcher der Mittelpunkt der Behälteröffnung und der Mittelpunkt der Verschlussblende (6) auf einer Achse liegen, wie obig als "Fall 1" bezeichnet, ist die Verschlussblende (6) eine segmentierte Verschlussblende (6) und umfasst eine Übersetzungseinheit, welche mit der segmentierten Verschlussblende (6) und dem elektrischen Antriebs- und Stellmotor (1) in mechanischer Wirkverbindung steht, sowie ein Gehäuse (11, 12).

Der Öffnungsmechanismus der erfindungsgemäßen segmentierten Verschlussblende (6) wird elektrisch angesteuert. Dabei wird die Ausgangswelle (2) eines elektrischen Antriebs- und Stellmotors (1) in eine rotatorische Bewegung versetzt, welche über eine Übersetzungseinheit in eine translatorische Bewegung umgesetzt wird. Die Übersetzungseinheit ist ein Getriebe, um die an einem Punkt angreifende Bewegung des Antriebs- und Stellmotors (1) auf die einzelnen Blendensegmente (6a,6b, 6c, ...) der Verschlussblende (6) zu übertragen, mit denen eine Wirkverbindung besteht. Durch die Ansteuerung der einzelnen Blendensegmente (6a,6b, 6c, ...) kann das Öffnungsverhältnis der segmentierten Verschlussblende (6) variiert werden.

Ein Gehäuse (11, 12) schützt die technische Einheit, insbesondere den Verschluss- und Öffnungsmechanismus der segmentierten Verschlussblende (6) sowie das Rieselgut, vor Einflüssen von außen.

In einer bevorzugten Ausführungsform wird der elektrische Antriebs- und Stellmotor (1) als Servomotor ausgeführt. Dadurch kann die genaue Position der Ausgangswelle (2) sowie die Drehzahl kontrolliert werden. Weiterhin hat sich als vorteilhaft erwiesen, den Motor pulsierend anzusteuern, und eine Drehrichtungsumkehr vorzusehen und sich die Verschlussblende (6) permanent öffnet oder schließt.

Eine andere bevorzugte Ausführungsform ist die Wahl eines Schrittmotors, welcher im Vergleich zum Servomotor erhebliche Kostenvorteile aufweist.

In einer besonderen Ausführungsform ist auf der Ausgangswelle (2) des elektrischen Antriebs- und Stellmotors (1) ein Antriebsritzel (3) befestigt, welches in zwei Drehrichtungen bewegt werden kann. Eine Übertragung der Drehbewegung auf den Blendenmechanismus wird dadurch ermöglicht. Eine erste Drehrichtung bewirkt die Öffnung der erfindungsgemäßen segmentierten Verschlussblende (6), wohingegen die umgekehrte Drehrichtung eine Schließung der Verschlussblende (6) induziert, wobei jeweils die Kraft aus der Drehbewegung auf den Blendenmechanismus wirkt, welcher folgend im Detail beschrieben wird.

Das voranstehende Antriebsritzel (3) ist mindestens notwendig, um die Verschlussblende (6) prinzipiell anzusteuern. Es hat sich jedoch als besonders vorteilhaft herausgestellt, das voranstehende Antriebsritzel (3) mit mindestens einem weiteren Übertragungsritzel (4) zu kombinieren, um so gemeinsam die Übertragungseinheit bilden. Ein weiteres Übertragungsritzel (4) außer dem Antriebsritzel (3) bietet eine gleichmäßigere Kraftübertragung auf die Blendensegmente (6a, 6b, 6c, ...).

Es hat sich als besonders vorteilhaft herausgestellt, wenn das Antriebsritzel (3) so angeordnet ist, dass es in einen die Übertragungseinheit umgebenden Zahnkranz (5) mit innenliegender Verzahnung eingreift und diesen dadurch in Rotation versetzt. Weitere Übertragungsritzel (4) können außerdem durch den außengelegenen Kranz angetrieben werden, wodurch eine synchrone Bewegung aller beteiligten Ritzel entsteht. Es entsteht eine gleichmäßige Kraftverteilung auf jedes Blendensegment (6a, 6b, 6c, ...) und eine zeitliche Synchronisation der Blendensegmente (6a, 6b, 6c, ...). Durch die erforderliche Lagerung zusätzlicher Übertragungsritzel (4) im Gehäuse (11, 12) wird das Gesamtsystem mechanisch stabilisiert, da Kräfte direkt in das Gehäuse (11, 12) abgeführt werden können. Diese Ausführungsform ist besonders vorteilhaft, mindestens erforderlich ist jedoch das Antriebsritzel (3) auf der Ausgangswelle (2) des elektrischen Antriebs- und Stellmotors (1).

In einer besonderes bevorzugten Ausführungsform besteht die segmentierte Verschlussblende (6) aus mindestens drei Blendensegmenten (6a,6b, 6c). Diese in sind mit ihrer dreieckigen Grundform derart gestaltet, dass an einer Kante eine Verzahnung (6z) vorgesehen ist, an der das Antriebsritzel (3), oder optionale Übertragungsritzel (4), eingreifen können. Es hat sich als vorteilhaft herausgestellt, dass die Form der Einzelelemente der eines gleichseitigen, mindestens jedoch gleichschenkligen Dreiecks entspricht. Bei der Verwendung eines gleichseitigen Dreiecks sind die Kanten (6g), welche keine Verzahnung (6z) aufweisen derart gestaltet, dass eine formschlüssige Verbindung zu den benachbarten Elementen hergestellt werden kann. Bei der Verwendung eines gleichschenkligen Dreiecks sind die Schenkel des Dreieckes, welche die identische Länge haben, mit den benachbarten Blendensegmenten (6a, 6b, 6c, ...) im formschlüssigen Kontakt. Durch diese formschlüssige Verbindung wird außer der genauen Führung der Blendensegmente (6a, 6b, 6c) eine gleichzeitige Dichtung erreicht, sodass keine Materialnebenströme außer dem durch die Blendenöffnung vorgegebenen, entstehen können. Ein weiterer Vorteil der formschlüssigen Verbindung der Blendensegmente (6a, 6b, 6c, ...) ist eine mechanische Aussteifung der erfindungsgemäßen segmentierten Verschlussblende (6), so dass diese größeren Belastungen durch Schütt- oder Rieselgut widerstehen kann.

Eine weitere Ausführungsform sieht vor, das Gehäuse (11, 12) mehrteilig auszuführen. Es hat sich als besonders vorteilhaft herausgestellt, das Gehäuse (11, 12) zweiteilig zu gestalten. Ein erstes Gehäuseteil (11) dient vor allem der Lagerung voranstehend beschriebener Übersetzungseinheit und der Aufnahme und Lagerung des obig beschriebenen Zahnkranzes (5) sowie der Blendensegmente (6a, 6b, 6c, ...), wohingegen ein zweites Gehäuseteil (12) diese Einheiten abdichtet sowie ebenfalls Lagerfunktionen übernimmt. Das erste Gehäuseteil (11) besteht vorzugsweise aus einer flächigen Stirnseite, angeordnet in einem bestimmten Abstand zum elektrischen Antriebs- und Stellmotor, und einer Umrandung, welche auf der Stirnfläche vollständig umschließt. Die Stirnseite weist mindestens zwei Öffnungen auf. Durch die erste Öffnung wird die Antriebswelle des Motos geführt. Außerhalb des Gehäuses (11, 12) befindet sich der Antriebs- und Stellmotor (1), wohingegen sich das auf der Antriebswelle befindliche Antriebsritzel (3) im Inneren des Gehäuses (11, 12) befindet. Durch die zweite Öffnung (16), welche sich zentral auf dem ersten Gehäuseteil (11) befindet, wird der Materialstrom geführt. Weitere, optional reversibel verschließbare Revisionsöffnungen können ebenfalls vorgesehen sein. In der Umrandung wird der optionale Zahnkranz (5) mit innenliegender Verzahnung gelagert. Auf dem flächigen Teil des ersten Gehäuseteils (11) befinden sich Lagerpunkte für die Lagerung (8) weiterer optionaler Übertragungsritzel (4). Außerdem sind dort Führungsnuten (10) für Führungsstifte (7) vorgesehen, auf die im späteren Verlauf noch eingegangen wird. Außerdem können weitere Funktionsteile angeordnet sein.

Auch das zweite Gehäuseteil (12) weist eine Öffnung im Mittelpunkt (16) auf, durch welche der Materialstrom geführt wird, wenn er aus dem Behälterboden in die Dosiereinheit eintritt. Weiterhin sind auch hier Lagerpunkte (8) zur Gegenlagerung der Übertragungsritzel (4) oder des Antriebsritzels (3) möglich. Hauptaufgabe des zweiten Gehäuseteils (12) ist das Abdichten des Gehäuses (11, 12) gegenüber dem Außen. Die Gehäuseteile (11, 12) werden miteinander verbunden. Besonders geeignet sind hier lösbare Verbindungen, wodurch zusätzliche Öffnungen, beispielsweise für Verschraubungen mit dem ersten Gehäuseteil, und die dafür erforderlichen Verbindungselemente (18) vorzusehen sind.

Es hat sich als vorteilhaft erwiesen, die im ersten Gehäuseteil (11) gelagerten Blendensegmente (6a, 6b, 6c, ...) mit einem Führungsstift (7) zu versehen. Die Blendensegmente (6a, 6b, 6c, ...) liegen im ersten Gehäuseteil (11) parallel zur Stirnseite des Gehäuses (11, 12). Zu Montagezwecken und um ein Verkippen oder Verklemmen der Elemente zu verhindern, verfügt jedes Blendensegment (6a, 6b, 6c, ...) vorzugsweise über zwei Führungsstifte (7), welche aus der Ebene der Blendensegmente (6a, 6b, 6c) herausragen und in den auf der innenliegenden Stirnseite des ersten Gehäuseteils (11) und des zweiten Gehäuseteils (12) befindlichen Führungsnuten (10) geführt wird. Ein Führen des Führungsstiftes (7) im zweiten Gehäuseteil (12) ist ebenfalls erforderlich, um ein Verkippen der Elemente zu verhindern.

Durch die besondere Ausführungsform und die n aufeinander abgleitenden Blendensegmente (6a, 6b, 6c, ...) wird eine n-eckige Öffnung erzielt, deren geometrischer Mittelpunkt auf der Achse des Materialstromes liegt. Die Öffnung weist dabei immer exakt so viele Ecken auf, wie Blendensegmente (6a, 6b, 6c, ...) verbaut sind. Eine Ecke wird gebildet durch das formschlüssige Abgleiten jeweils einer Kante von zwei benachbarten Blendensegmenten (6a, 6b, 6c, ...) aneinander, wodurch eine Ecke entsteht. Das Material kann somit ohne die Gefahr eines Materialstaus und vor allem vollständig aus einem Behälter entnommen werden.

Ein weiterer Vorteil der erfindungsgemäßen segmentierten Verschlussblende (6) liegt darin, dass nur die einzelnen Blendensegmente (6a, 6b, 6c, ...) über Antriebsritzel (3), Übertragungsritzel (4) und umgebenden Zahnkranz (5) bewegt werden, alle anderen Elemente der erfindungsgemäßen Dosiereinheit bleiben starr, insbesondere starr gegenüber dem Behälter.

In der voranstehend beschriebenen Ausführungsform, welche sich als besonders vorteilhaft erwiesen hat, erfolgt eine Anregung des Antriebsritzels (3) mit einer rotarischen Bewegung aus dem Antriebs- und Stellmotor (1). Das Antriebsritzel (3) ist sowohl mit der Verzahnung (6z) an einer Seite eines Blendensegments (6a, 6b, 6c) im Eingriff als auch mit dem sich als besonders vorteilhaft ergebenen Zahnkranz (5) mit innenliegender Verzahnung. Die Drehrichtung des Antriebsritzels (3) und des umgebenden Zahnkranzes (5) sind dabei zwangsweise und naturgemäß gegenläufig. Die rotatorische Bewegung des Antriebsritzels (3) wird durch die Verzahnung (6z) am Blendensegment (6a, 6b, 6c) und den Eingriff des Antriebsritzels (3) darin in eine translatorische Bewegung des Blendensegments (6a, 6b, 6c) umgesetzt.

Mögliche und als besonders vorteilhaft erachtete weitere Übertragungsritzel (4) sind mit dem umliegenden Zahnkranz (5) mit innenliegender Verzahnung im Eingriff und werden dadurch synchron mit dem Antriebsritzel (3) angetrieben und übertragen diese rotatorische Bewegung genau wie das Antriebsritzel (3) in eine translatorische Bewegung auf weitere Blendensegmente (6a, 6b, 6c).

Eine Anzahl von sechs Blendensegmenten (6a, 6b, 6c, 6d, 6e, 6f) hat sich als besonders vorteilhaft herausgestellt. Durch die Übersetzung der rotatorischen Bewegung des Antriebsritzels (3) und der optionalen weiteren Übertragungsritzel (4) in eine translatorische Bewegung, welche das Abgleiten der Blendensegmente (6a, 6b, 6c, 6d, 6e, 6f) aneinander hervorruft, wird die Öffnungsweite der Verschlussblende (6) gesteuert.

In einer besonderen Ausführungsform ist das Gehäuse (11, 12) druckdicht ausgeführt. Damit sind die innenliegende Übertragungseinheit und die Mechanik der segmentierten Verschlussblende (6) geschützt gegen Einflüsse von außen. Ebenso ist es durch die lösbare Verbindung beider Gehäuseteile (11,12) derart gestaltet, dass bei einem mechanischen Problem im Inneren des Gehäuses (11, 12), innerhalb kurzer Zeit geöffnet und in Stand gesetzt werden kann. Ein zwischen dem ersten Gehäuseteil (11) und dem zweiten Gehäuseteil (12) befindlicher Dichtring (13) stellt die geforderte Druck- und Staubdichtheit zusätzlich sicher.

Es hat sich weiterhin als besonders vorteilhaft erwiesen, dass bei der segmentierten Verschlussblende (6) mindestens ein Element geerdet ist. Eine statische Aufladung durch Reibung des Materials an den Blendenelementen (6a, 6b, 6c, ...), welche schlimmstenfalls zu einem Materialstau führen kann, ist demnach ausgeschlossen.

In einer besonderen Ausführungsform wird die Dosierblende um ein Element (17) zur Beschleunigung des Materialstroms stromabwärts nach der Verschlussblende (6) erweitert. Damit wird eine schnellere Füllung der nachgelagerten Form ermöglicht, und das Risiko eines Materialstaus in der Verschlussblende (6) minimiert. Über einen Anschlussflansch mit dem ersten Gehäuseteil (11) oder direkt mit Behälterboden an vorgesehenen Aufnahmepunkte verbunden, schließt sich ein vorzugsweise zylinderförmiger Hohlkörper mit einem Innendurchmesser, welcher mindestens dem Durchmesser einer geöffneten Verschlussblende (6) entspricht, an. In einem Übergangsbereich vom Anschlussflansch zum Hohlkörper befindet sich eine umlaufende Vertiefung (20) im Flansch mit einem Radius größer als der des Hohlzylinders, jedoch kleiner als der Außenradius des Anschlussflansches. Der Hohlzylinder ist in einer besonders bevorzugten Ausführungsform derart gestaltet, dass sich mindestens eine, bevorzugt mehrere Bohrungen (21) auf der Außenseite des Zylinders über den Umfang verteilt, im Bereich der umgebenden Vertiefung im Flanschbereich befinden. Diese Bohrungen sind zur Achse des Hohlzylinders und damit des Materialstroms geneigt wobei sie in einem Winkel von mindestens 1° bis maximal 89°, bevorzugt in einem Winkel von 20° bis 75°, besonders bevorzugt in einem Winkel zwischen 30° und 50° in der Wandung des Hohlzylinders angebracht sind. Die umlaufende Vertiefung (20) kann über einen Anschluss (19) mit Druckluft beaufschlagt werden, von wo sie dann durch die Bohrungen ins Innere des Hohlzylinders strömt und auf den Materialstrom trifft.

Es hat sich als besonders vorteilhaft herausgestellt, an jedem einzelnen Behälterauslass eine einzeln ansteuerbare Dosierblende, vorzugsweise eine segmentierte Verschlussschlussblende (6), wie voranstehend beschrieben, mit dem Element (17) zur Beschleunigung des Materialstroms zu verbinden, um ein optimales Ergebnis beim Füllen einer Form mit komplexer Geometrie zu erhalten. Zusätzlich sind Energieeinsparungen möglich, da jeder Auslass einzeln angesteuert werden kann. Zusätzlich besteht die Möglichkeit, bestimmte Auslässe früher oder später abzuschalten, was zu einer Energieeinsparung im Druckluftbereich führt.

Die vorstehend definierte Aufgabe wird ferner durch einen Behälter zur Bevorratung und Ausgabe von fließ- und/oder rieselfähigem Material mit einem mindestens zwei Auslässe aufweisenden Behälterboden gelöst, wobei das fließ- und/oder rieselfähige Material durch diese mindestens zwei Auslässe aus dem Behälter entnehmbar ist. Der erfindungsgemäße Behälter zeichnet sich dadurch aus, dass jeder Auslass im Behälterboden separat und unabhängig über eine erfindungsgemäße Dosiereinheit, wie sie vorstehend beschrieben ist, ansteuerbar ist.

Ein Behälter stellt hierbei ein Gefäß dar, in dem das Schüttgut gelagert oder gefördert wird. Beispielsweise, aber keinesfalls abschließend, sind damit Tanks, Silos und Förderschläuche gemeint, welche über mindestens einen Materialauslass verfügen.

Es hat sich als vorteilhaft herausgestellt, wenn der Behälterboden an jedem Auslass eine trichterförmige Vertiefung aufweist und diese optional nachrüstbar ist.

Der Boden des Behälters, aus dem rieselfähiges Material entnommen werden soll, weist trichterförmige Vertiefungen auf, aus denen das Material gezielt zur erfindungsgemäßen Dosiereinheit geleitet wird. Dabei ist für jede Dosiereinheit eine eigene, bevorzugt trichterförmige Vertiefung vorzusehen. Der neuartige Behälterboden ist entweder direkt bei der Fertigung des Behälters vorzusehen, oder in einen bodenlosen Behälter als Nachrüstteil einzulegen.

In einer Weiterbildung des Behälters ist jede wie vorstehend beschriebene erfindungsgemäße Dosiereinheit individuell hinsichtlich zumindest der Regelparameter minimale Öffnungsweite, maximale Öffnungsweite, Öffnungsgeschwindigkeit und Schließgeschwindigkeit ansteuerbar.

Vorteilhafterweise erfolgt die Ansteuerung der erfindungsgemäßen Dosiereinheiten nicht lediglich als binäres Öffnen oder Schließen, sondern im Rahmen eines adaptiven, lernfähigen Steuerungssystems. Dieses ermöglich das individuelle Ansteuern und individuelle Parametrieren jeder einzelnen erfindungsgemäßen Dosiereinheit durch zumindest die Regelparameter
a) minimale Öffnungsweite,
b) maximale Öffnungsweite,
c) Öffnungsgeschwindigkeit (Speed auf),
d) Schließgeschwindigkeit (Speed zu).

Eine weitere Ausführungsform des Behälters sieht vor, dass durch Gleichsetzen der Regelparameter minimale Öffnungsweite und maximale Öffnungsweite eine statische Ausgabe von fließ- und/oder rieselfähigem Material ohne Pulsierung der Ausgabe realisierbar ist.

Es hat sich als vorteilhaft herausgestellt, wenn der erfindungsgemäße Behälter ferner umfasst
- eine Einrichtung zur Durchflussüberwachung in Echtzeit, die stromabwärts jeder erfindungsgemäßen Dosiereinheit angeordnet ist,
- eine Einrichtung zur automatischen Abschaltung jeder erfindungsgemäßen Dosiereinheit bei Detektieren eines Materialfluss-Stopp,
wobei die Regelparameter jeder wie vorstehend beschriebenen Dosiereinheit in Abhängigkeit von Echtzeit-Durchflussdaten und/oder Formgeometrie und/oder einer Zuordnung zu bestimmten Füllbereichen automatisch anpassbar sind.

Durch diese vorteilhaften Weiterbildungen lassen sich sowohl pulsierende Bewegungsprofile als auch statische Festwerte jeder einzelnen erfindungsgemäßen Dosiereinheit realisieren. So können minimale und maximale Öffnungsweite identisch ausgewählt werden, um eine statische Betriebsweise zu erreichen. Diese hohe Regelauflösung erlaubt eine gezielte Anpassung an verschiedene Formfüllszenarien und stellt sicher, dass jede erfindungsgemäße Dosiereinheit exakt nach Bedarf angesteuert und betrieben wird.

Die vorliegende Erfindung stellt damit erstmals ein adaptives System zur Verfügung, das sich direkt auf die Prozessqualität, die Materialverteilung und die Energieeffizienz von Füllprozessen auswirkt. Das erfindungsgemäße adaptive System übersteigt die Fähigkeiten herkömmlicher Dosiersysteme, in denen lediglich über die Bauform der Dosierscheibe und deren manuelle Taktung Einfluss genommen werden kann.

In einem weiteren Aspekt bezieht sich die vorliegende Erfindung auf eine Vorrichtung zur Dosierung von fließ- oder rieselfähigem Material umfassend
- einen erfindungsgemäßen Behälter, wie er vorstehend beschrieben wurde,
- eine erfindungsgemäße Dosiereinheit, wie sie vorstehend beschrieben wurde, pro Auslass des wie vorstehend beschriebenen erfindungsgemäßen Behälters.

Weitere Ziele, Merkmale, Vorteile und Anwendungsmöglichkeiten ergeben sich aus der nachfolgenden Beschreibung von die Erfindung nicht einschränkenden Ausführungsbeispielen anhand der Figuren. Dabei bilden alle beschriebenen und/oder bildlich dargestellten Merkmale für sich oder in beliebiger Kombination den Gegenstand der Erfindung, auch unabhängig von ihrer Zusammenfassung in den Ansprüchen oder deren Rückbeziehung. Dargestellt ist eine besonders bevorzugte Ausführungsform.

Es zeigen:
- Fig. 1: eine perspektivische Ansicht des Dosiereinheit mit Antriebsmotor 1, im montierten Zustand,
- Fig. 2: eine schematische Explosionszeichnung der Dosiereinheit in perspektivischer Ansicht,
- Fig. 3: ein Blendensegment 6a,
- Fig. 4: ein Element 17 zu Beschleunigung des Materialstroms,
- Fig. 5: ein erstes Gehäuseteil 11,
- Fig. 6: ein zweites Gehäuseteil 12,
- Fig. 7: eine schematische Ansicht einer erfindungsgemäßen Dosiereinheit in einer ersten Öffnungsstellung,
- Fig. 8: eine schematische Ansicht einer erfindungsgemäßen Dosiereinheit in einer zweiten Öffnungsstellung,
- Fig. 9: eine schematische Ansicht einer erfindungsgemäßen Dosiereinheit in einer dritten Öffnungsstellung,
- Fig. 10: eine schematische Ansicht eines erfindungsgemäßen Behälterbodens von unten mit erfindungsgemäßen Dosiereinheiten und
- Fig. 11: eine schematische Ansicht eines erfindungsgemäßen Behälterbodens von oben mit erfindungsgemäßen Dosiereinheiten.

In den Figuren werden alle gleichen Bauteile mit den gleichen Bezugszeichen benannt, aus Gründen der Übersichtlichkeit sind aber nicht in allen Darstellungen alle Bezugszeichen eingefügt.

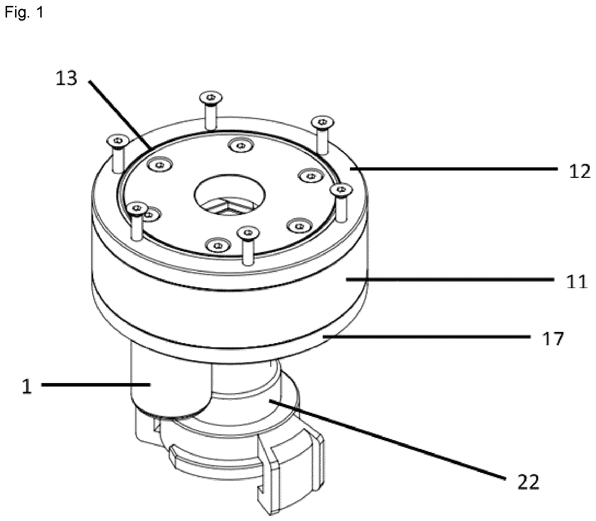

Figur 1 stellt eine schematische Zeichnung der Dosiereinheit in perspektivischer Ansicht dar. Die Darstellung entspricht der Fließrichtung durch die Dosiereinheit. In Fließrichtung angeordnet sind der zweite Gehäuseteil 12, der erste Gehäuseteil 11, das Element 17 zur Beschleunigung des Materialstroms sowie der Antriebs- und Stellmotor 1.

Behälterseitig liegt ein Dichtring 13 in einer Nut des zweiten Gehäusedeckels 12, um einen staub- und druckdichten Anschluss zum Behälter zu realisieren. Mit einem Anschlussverbinder 22 kann die Einheit an einer zu füllenden Form befestigt werden.

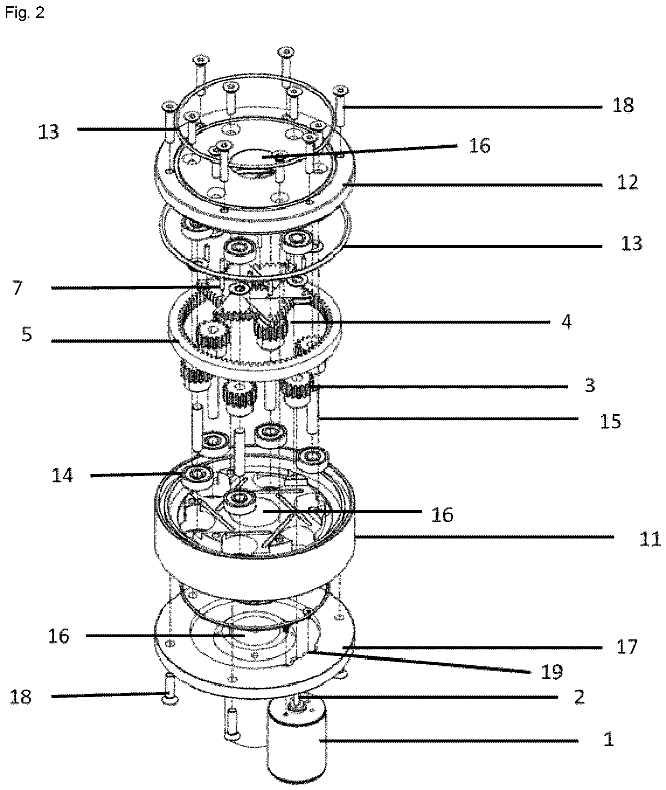

In Figur 2 sind Details der Konstruktion offenbart. Die zentrale Einheit der Dosiereinheit, die Blendenmechanik wird durch den Zahnkranz 5, Antriebsritzel 3 und Übertragungsritzel 4, mehrere Blendensegmente 6a, 6b, 6c, ... und Führungsstifte 7 gebildet.

Der Zahnkranz 5 wird im ersten Gehäuseteil 11 gelagert. Im ersten Gehäuseteil 11 sowie im zweiten Gehäuseteil 12 sind entsprechende Vertiefungen zur Aufnahme der Lager 14 für die Wellen 15 des Antriebsritzels 3 und der Übertragungsritzel 4 vorgesehen. Aufgrund der perspektivischen Darstellung sind die Vertiefungen nur im zweiten Gehäuseteil sichtbar. Das Antriebsritzel 3 sowie die Übertragungsritzel 4 werden im Inneren des Zahnkranzes 5 geführt.

Im ersten Gehäuseteil 11, im zweiten Gehäuseteil 12 sowie in dem Element 17 zur Beschleunigung des Materialstroms ist eine mittige Öffnung 16 für den Materialstrom vorgesehen. Ferner sind Führungsnuten 10 in der Anzahl der Blendenelemente eingefräst, um Führungsstifte 7 der Blendenelemente aufzunehmen. Diese werden durch vorgesehene Bohrungen in den Blendenelementen 6a, 6b, 6c, ... geführt.

Die Blendenelemente 6a, 6b, 6c, ... weisen eine dreieckige Grundform auf, wobei zwei Kanten 6g mit jeweils einem benachbarten Blendenelement 6a, 6b, 6c, ... in Kontakt steht und die dritte Kante 6z mit einer Verzahnung versehen ist und im Kontakt mit dem Antriebsritzel 3 oder einem der Übertragungsritzel 4 steht.

Das Antriebsritzel 3 ist mit dem Antriebs- und Stellmotor 1 über eine Welle verbunden.

Beide Gehäusehälften werden miteinander mittels einer Verschraubung 18 befestigt. Zur Abdichtung gegen Staub und Feuchtigkeit sowie für Druckdichtheit befindet sich ein Dichtring 13 zwischen beiden Gehäusehälften 11, 12.

Angeschraubt an das erste Gehäuseteil 11 ist das Element 17 zur Beschleunigung des Materialstroms, welches ebenfalls eine mittige Öffnung 16 für den Materialstrom aufweist und eine Durchführung der Antriebswelle 2 vom Antriebs- und Stellmotor 1 zur Antriebsritzel 3 ermöglicht. Auch ein Anschluss 19 für die Zufuhr von Druckluft ist vorgesehen.

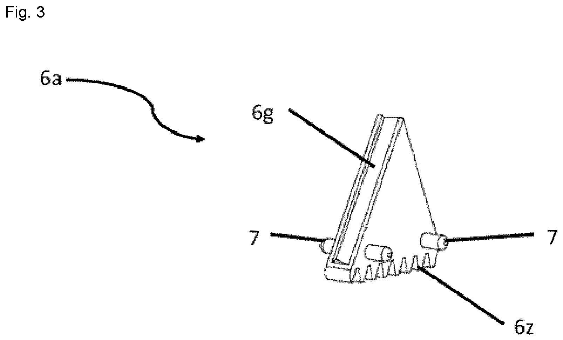

Figur 3 zeigt exemplarisch für ein Blendenelement 6a, 6b, 6c, 6d, 6e, 6f ein schematisches Blendenelement 6a mit bereits eingesetzten Führungsstiften 7. Deutlich erkennbar ist, dass die Kante 6g, an der ein anderes Blendenelement im Öffnungs- oder Schließprozess der Blende abgleitet, derart geformt ist, dass eine formschlüssige, materialdichte Verbindung zum benachbarten Blendenelement möglich ist. Die Verzahnung 6z ist derart ausgelegt, dass sie zum Antriebsritzel 3 oder den Übertragungsritzeln 4 passt.

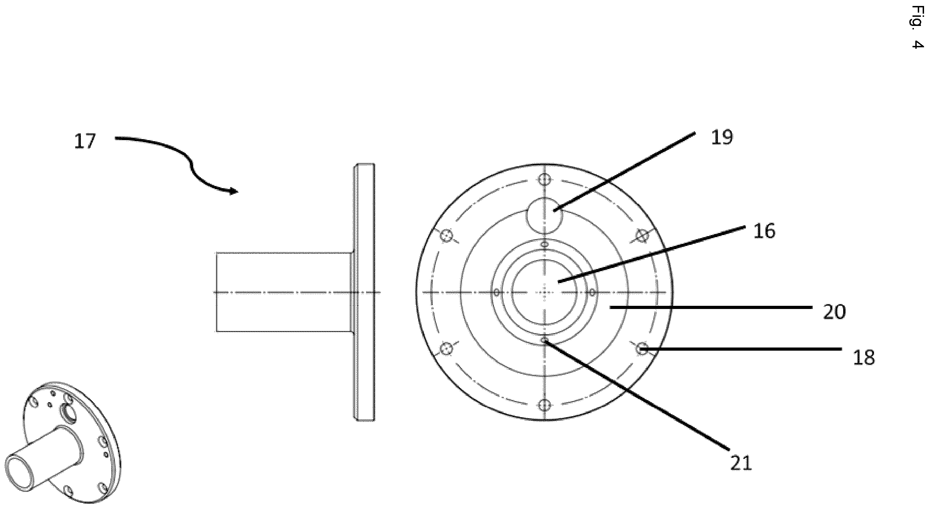

Figur 4 zeigt das Element 17 zur Beschleunigung des Materialstroms. Die Öffnung 16 für den Materialstrom ist rotationssymmetrisch mittig im Element und ermöglicht die Durchführung des Materials. Mit einem umlaufenden Flansch und den vorhandenen Befestigungsmöglichkeiten wird das Element 17 zur Beschleunigung des Materialstroms an den ersten Gehäuseteil 11 geschraubt. Eine umlaufende Vertiefung 20, in welche Druckluft 19 eingeblasen wird, weist in Richtung des Materialstroms führende, rotationssymmetrisch schräg angeordnete Bohrungen 21 auf, durch die die Druckluft auf den Materialstrom geführt wird.

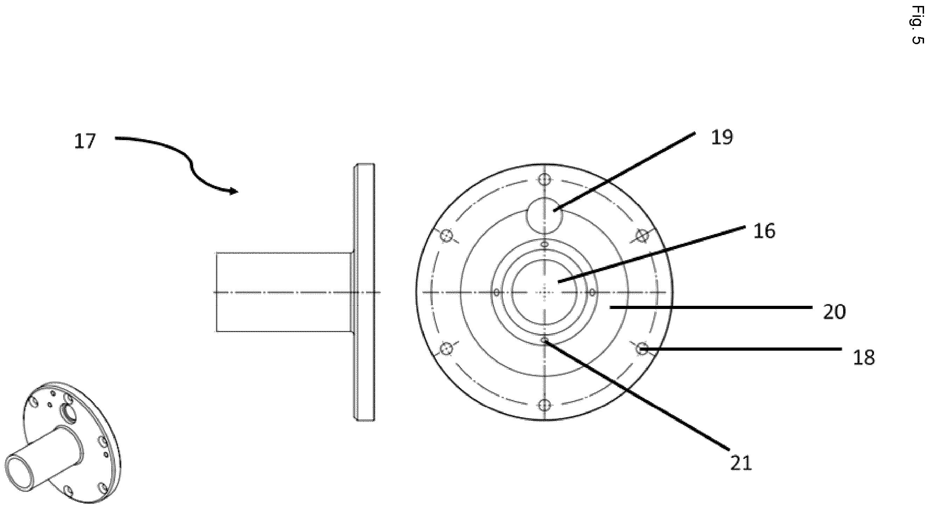

Figur 5 zeigt den ersten Gehäuseteil 11 mit allen Lagerpunkten 8 zur Aufnahme der Lager 14 für das Antriebsritzel 3 sowie die Übertragungsritzel 4. Sichtbar sind außerdem die Führungsnuten 10 in denen die Führungsstifte 7 der Blendenelemente 6a, 6b, 6c, 6d, 6e, 6f geführt werden.

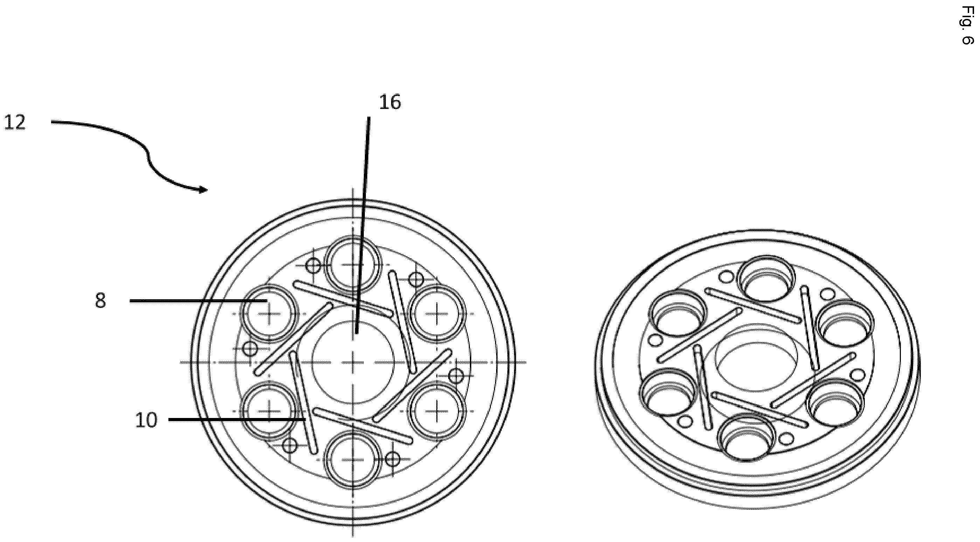

Figur 6 zeigt den zweiten Gehäuseteil 12 mit allen Lagerpunkten 8 zur Aufnahme der Lager 14 für das Antriebsritzel 3 sowie die Übertragungsritzel 4. Sichtbar sind außerdem die Führungsnuten 10 in denen die Führungsstifte 7 der Blendenelemente 6a, 6b, 6c, 6d, 6e, 6f geführt werden.

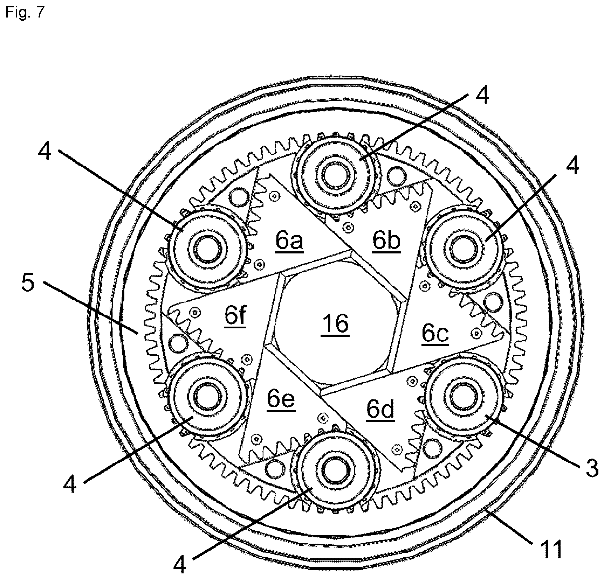

Die Figuren 7, 8 und 9 zeigen exemplarisch drei Öffnungsstellungen einer erfindungsgemäßen Dosiereinheit. In diesen Ansichten wurden einzelne Elemente nicht dargestellt, um das Zusammenwirken der Blendensegmente 6a, 6b, 6c, 6d, 6e, 6f untereinander und mit dem Antriebsritzel 3 sowie den Übertragungsritzeln 4 deutlicher zeigen zu können.

Aus den Darstellungen ist zu erkennen, wie die Blendensegmente 6a, 6b, 6c, 6d, 6e, 6f mit Ihren gleichschenkligen Seiten über eine formschlüssige Verbindung, hier in einer Art Nut-und-Feder-System, mit Ihren Seiten 6g untereinander in Wirkverbindung stehen. Jedes der Blendensegmente 6a, 6b, 6c, 6d, 6e, 6f gleitet bei Antrieb durch ein Ritzel 3, 4 auf den benachbarten Blendensegmenten 6a, 6b, 6c, 6d, 6e, 6f und stellt so eine gleichmäßige Bewegung sicher.

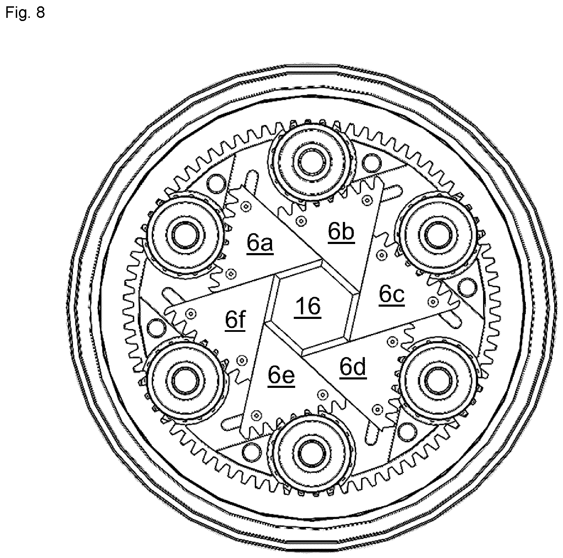

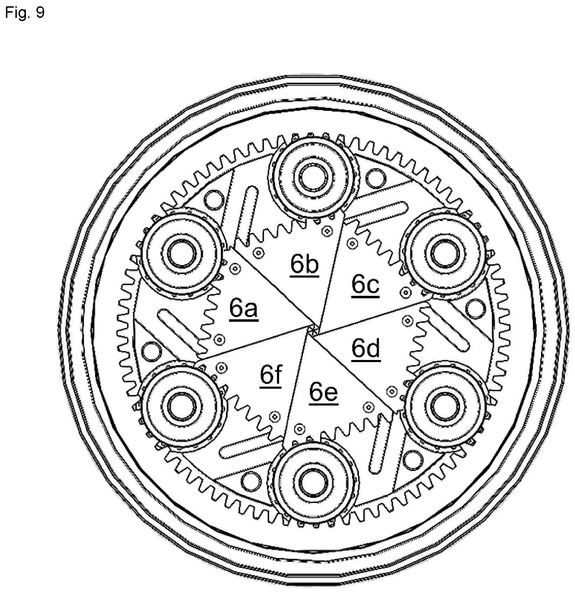

Die Figur 7 zeigt eine größtmögliche Öffnung 16 für einen Materialstrom, wobei die Blendensegmente 6a, 6b, 6c, 6d, 6e, 6f maximal ausgelenkt sind. In Figur 8 ist eine etwa mittelgroße Öffnung 16 zu sehen, die Blendensegmente 6a, 6b, 6c, 6d, 6e, 6f befinden sich in Mittelposition. Gut ist hier der Eingriff der Ritzel 3, 4 in die Verzahnung 6z am jeweiligen Blendensegment6a, 6b, 6c, 6d, 6e, 6f zu erkennen. Figur 9 zeigt eine im Wesentlichen vollständig geschlossene Öffnung 16, bei der die Blendensegmente 6a, 6b, 6c, 6d, 6e, 6f maximal eingelenkt sind.

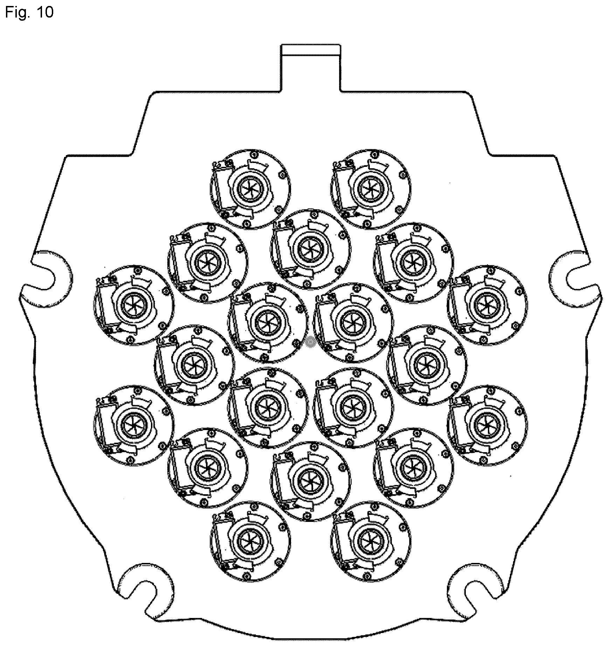

In Figur 10 wird beispielhaft der Boden eines erfindungsgemäßen Behälters mit einer Vielzahl von Auslässen darin gezeigt, wobei auf jedem Auslass eine erfindungsgemäße Dosiereinheit angebracht ist. Da jede dieser erfindungsgemäßen Dosiereinheiten individuell angesteuert werden kann, ist es möglich, das fließ- und/oder rieselfähige Material in unterschiedlichen Mengen und verschiedenen Gradienten über die Fläche verteilt auszugeben.

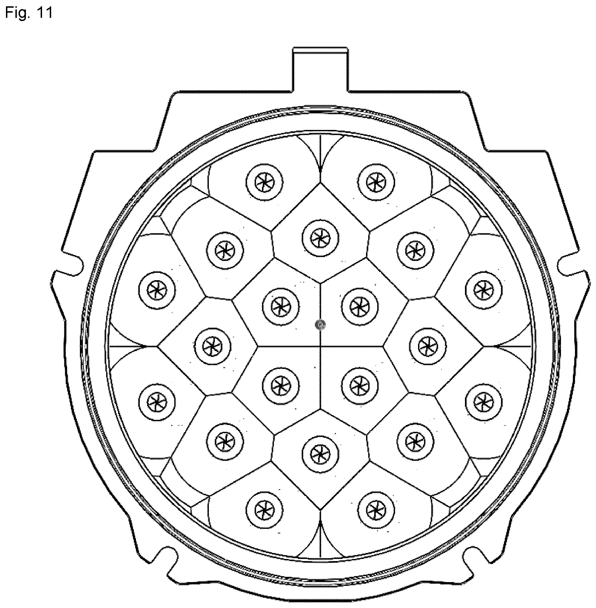

Figur 11 stellt schließlich den in Figur 10 gezeigten Boden eines erfindungsgemäßen Behälters mit einer Vielzahl von Auslässen darin dar. Hier sind durch die Auslässe hindurch die darunter liegenden erfindungsgemäße Dosiereinheit zu erkennen, von denen in dieser Darstellung nur die Blendensegmente 6a, 6b, 6c, 6d, 6e, 6f in geschlossenem Zustand zu sehen sind.

### Bezugszeichen

- 1: Antriebs- und Stellmotor
- 2: Ausgangswelle
- 3: Antriebsritzel
- 4: Übertragungsritzel
- 5: Zahnkranz
- 6: segmentierte Verschlussblende
- 6a, 6b, 6c, ...: Blendensegmente
- 6z: Verzahnung am Blendensegment
- 6g: Stirnseite am Blendensegment
- 7: Führungsstift
- 8: Lagerstellen im Gehäuse
- 10: Führungsnut
- 11: erster Gehäuseteil
- 12: zweiter Gehäuseteil
- 13: Dichtring
- 14: Lager
- 15: Welle für Ritzel
- 16: Öffnung für Materialstrom
- 17: Element zur Beschleunigung des Materialstroms
- 18: Schraubverbindungen
- 19: Druckluftanschluss
- 20: Vertiefung für Druckluft
- 21: Bohrung für Druckluft
- 22: möglicher Anschluss an eine Form

## Patentansprüche

1. Dosiereinheit mit variabler Öffnungsweite zur Dosierung von fließ- und/oder rieselfähigem Material, umfassend
- eine Öffnung (16) für das fließ- und/oder rieselfähige Material, wobei die Öffnung (16) zum Anschluss an einen Auslass eines Behälters ausgelegt ist,
- eine Verschlussblende (6) zum Öffnen und Schließen der Öffnung (16) für das fließ- und/oder rieselfähige Material,
- einen elektrischen Antriebs- und Stellmotor (1) für die Verschlussblende (6),
wobei der geometrische Mittelpunkt der Verschlussblende (6) auf der Achse der Öffnung (16) für das fließ- und/oder rieselfähige Material liegt.

2. Dosiereinheit nach Anspruch 1, wobei die Verschlussblende (6) eine segmentierte Verschlussblende (6) ist, ferner umfassend
- eine Übersetzungseinheit (3, 4, 5), welche mit der segmentierten Verschlussblende (6) und dem elektrischen Antriebs- und Stellmotor (1) in mechanischer Wirkverbindung steht,
- ein Gehäuse (11, 12).

3. Dosiereinheit nach Anspruch 1 oder 2, wobei
der elektrische Antriebs- und Stellmotor (1) dazu ausgelegt ist, seine Ausgangswelle (2) in eine rotatorische Bewegung zu versetzen und zwei Drehrichtungen auszugeben, wobei auf der Ausgangswelle (2) zumindest ein Antriebsritzel (3) befestigt ist,
und/oder
die Übersetzungseinheit mindestens ein Antriebsritzel (3), das auf der Ausgangswelle (2) des elektrischen Antriebs- und Stellmotors (1) angeordnet ist, und optional weitere Übertragungsritzel (4) und optional einen Zahnkranz (5) mit innenliegender Verzahnung aufweist, welche im Gehäuse (11, 12) gelagert werden.

4. Dosiereinheit nach einem der Ansprüche 1 bis 3, wobei
die segmentierte Verschlussblende (6) aus mindestens drei einzelnen Blendensegmenten (6a, 6b, 6c) besteht, welche eine mindestens gleichschenklige dreieckige Grundform haben und die gleichschenkligen Seiten der Blendesegmente (6a, 6b, 6c) formschlüssig (6g) mit den benachbarten Blendensegmenten (6a, 6b, 6c) in Kontakt stehen und die verbleibende Kante, mindestens an dem mit dem Antriebsritzel (3) in Kontakt stehenden Blendensegment (6a, 6b, 6c), eine entsprechende Verzahnung (6z) zum Kontakt mit dem Ritzel (3, 4) aufweist, und/oder
zumindest die Verschlussblende (6) geerdet ist.

5. Dosiereinheit nach einem der Ansprüche 1 bis 4, wobei
das Gehäuse (11, 12) mindestens zweiteilig ausgeführt ist und im ersten Gehäuseteil (11) eine Durchführung der Ausgangswelle (2) des Antriebs- und Stellmotors (1) ermöglicht und derart gestaltet ist, dass es einen Materialstrom durch die segmentierte Verschlussblende (6) mit variabler Öffnungsweite erlaubt, und/oder
das Gehäuse (11, 12) druckdicht und staubdicht ausgeführt ist.

6. Dosiereinheit nach einem der Ansprüche 1 bis 5, wobei jedes der Blendensegmente (6a, 6b, 6c) mindestens einen Führungsstift (7) aufnimmt, welcher mindestens in einem Gehäuseteil in einer vorgesehenen Führungsnut (10) geführt wird und senkrecht aus den Hauptflächen der Blendensegmente (6a, 6b, 6c) herausragt.

7. Dosiereinheit nach einem der Ansprüche 1 bis 6, wobei die einzelnen Blendensegmente (6a, 6b, 6c) symmetrisch in der Blendenfläche angeordnet sind, wobei die Blendenfläche eine Öffnungsfläche mit n Ecken entstehen lässt, wobei n die Anzahl an Blendenelementen (6a, 6b, 6c) darstellt.

8. Dosiereinheit nach einem der Ansprüche 1 bis 7, wobei die rotatorische Bewegung der Ausgangswelle (2) über das Antriebsritzel (3) auf den optional umgebenden Zahnkranz (5) und damit auf optional weitere Übertragungsritzel (4) übertragbar ist und zumindest durch das mit dem Antriebsritzel (3) in Kontakt stehende Blendensegment (6a, 6b, 6c) mit der Verzahnung (6z) in eine translatorische Bewegung umsetzbar ist, wodurch, durch das Abgleiten der Blendensegmente (6a, 6b, 6c) an den Kontaktflächen zwischen den einzelnen Blendensegmenten (6a, 6b, 6c), die Öffnungsweite veränderbar ist.

9. Dosiereinheit nach einem der Ansprüche 1 bis 8, ferner umfassend ein Element (17) zur Beschleunigung des Materialstroms stromabwärts der Verschlussblende (6) aufweisend
- einen vorzugsweise zylinderförmigen Hohlkörper,
- Aufnahmepunkte zur Verbindung mit dem Gehäuse (11, 12) der Dosiereinheit oder einem Behälterboden,
- mindestens eine Bohrung (21) im Winkel zur Achse des Materialstromes, wobei diese in einem Winkel von mindestens 1° bis maximal 89°, bevorzugt in einem Winkel von 20° bis 75°, besonders bevorzugt in einem Winkel zwischen 30° und 50° in der Wandung des Hohlzylinders angebracht ist, wobei Druckluft durch die mindestens eine Bohrung auf den Materialstrom blasbar ist.

10. Behälter zur Bevorratung und Ausgabe von fließ- und/oder rieselfähigem Material mit einem mindestens zwei Auslässe aufweisenden Behälterboden, wobei das fließ- und/oder rieselfähige Material durch diese mindestens zwei Auslässe aus dem Behälter entnehmbar ist,
**dadurch gekennzeichnet, dass** jeder Auslass im Behälterboden separat und unabhängig über eine Dosiereinheit nach einem der Ansprüche 1 bis 9 ansteuerbar ist.

11. Behälter nach Anspruch 12, wobei der Behälterboden an jedem Auslass eine trichterförmige Vertiefung aufweist und diese optional nachrüstbar ist.

12. Behälter nach Anspruch 10 oder 11, wobei jede Dosiereinheit nach einem der Ansprüche 1 bis 12 individuell hinsichtlich zumindest der Regelparameter minimale Öffnungsweite, maximale Öffnungsweite, Öffnungsgeschwindigkeit und Schließgeschwindigkeit ansteuerbar ist.

13. Behälter nach einem der Ansprüche 19 bis 12, wobei durch Gleichsetzen der Regelparameter minimale Öffnungsweite und maximale Öffnungsweite eine statische Ausgabe von fließ- und/oder rieselfähigem Material ohne Pulsierung der Ausgabe realisierbar ist.

14. Behälter nach einem der Ansprüche 10 bis 13, ferner umfassend
- eine Einrichtung zur Durchflussüberwachung in Echtzeit, die stromabwärts jeder Dosiereinheit nach einem der Ansprüche 1 bis 12 angeordnet ist,
- eine Einrichtung zur automatischen Abschaltung jeder Dosiereinheit nach einem der Ansprüche 1 bis 12 bei Detektieren eines Materialfluss-Stopp,
wobei die Regelparameter jeder Dosiereinheit nach einem der Ansprüche 1 bis 12 in Abhängigkeit von Echtzeit-Durchflussdaten und/oder Formgeometrie und/oder einer Zuordnung zu bestimmten Füllbereichen automatisch anpassbar sind.

15. Vorrichtung zur Dosierung von fließ- oder rieselfähigem Material umfassend
- einen Behälter nach Anspruch 10 bis 14,
- eine Dosiereinheit nach einem der Ansprüche 1 bis 9 pro Auslass des Behälters nach Anspruch 10 bis 14.
